# DEMANDE DE BREVET EUROPEEN

(11) **EP 1 231 787 A1**
(43) Date de publication de la demande: **14.08.2002**
(21) Numéro de dépôt: 02100117.7
(22) Date de dépôt: 08.02.2002
(51) Int. Cl.: H04N 5/782

(54) **Procédé numérique d'enregistrement d'une séquence vidéo**

(30) Priorité: 08.02.2001 FR 0101741
(71) Demandeur: SAGEM SA, 75015 Paris (FR)
(72) Inventeur: CUOQ, Jean Noel, 92150, SURESNES (FR)
(74) Mandataire: Schmit, Christian Norbert Marie

(57) **Abrégé**

On paramètre (401-403) un récepteur/décodeur de télévision pour qu'il effectue un enregistrement d'une émission sur un canal donné. A l'heure dite on déclenche (404) l'enregistrement, et on enregistre (406) une description du fichier correspondant à cet enregistrement. Au cours de cet enregistrement on analyse (409) un flux de messages d'informations pour détecter un changement d'émission sur le canal qui est en train d'être enregistré. Si on détecte un tel changement, on crée un nouveau fichier pour enregistrer la nouvelle émission. A la fin de l'enregistrement il y a autant de fichiers que d'émissions au cours de la plage d'enregistrement. Chaque fichier est décrit de manière à ce que l'on puise déterminer s'il s'agit d'une émission entière. Par la suite il est possible de sélectionner (411) chacun des fichiers pour le visualiser ou l'effacer.

## Description

La présente invention a pour objet un procédé numérique d'enregistrement d'une séquence vidéo. Le domaine de l'invention est celui de la télévision numérique, et des récepteurs/décodeurs qui lui sont associés. Un but de l'invention est de permettre une plus grande ergonomie dans la gestion des enregistrements sur un récepteur/décodeur. Un autre but de l'invention est de permettre d'optimiser la gestion des espaces de stockage que comporte un récepteur/décodeur numérique. Un troisième but de l'invention est de fournir à un utilisateur d'un récepteur/décodeur numérique un maximum d'informations sur les fichiers vidéos qui sont enregistrés dans son récepteur/décodeur.

Dans l'état de la technique on connaît des appareils permettant d'enregistrer des émissions diffusées à la télévision. Ces appareils sont soit analogiques, un magnétoscope classique par exemple, soit numériques comme un récepteur/décodeur de télévision numérique comportant un disque dur. Quel que soit le type d'appareil utilisé l'interface de programmation est la même. Pour réaliser un enregistrement, il faut commencer par sélectionner un canal, c'est-à-dire une chaîne de télévision, sur lequel va être diffusée l'émission que l'on souhaite enregistrer. Puis on saisit une heure de début d'enregistrement et une heure de fin d'enregistrement. La manière de définir l'heure du début et l'heure de fin consiste le plus souvent à consulter un programme de télévision. Un tel programme de télévision est par exemple une revue qui publie les programmes d'un certain nombre de chaînes.

Le principal inconvénient lié à cette méthode est la manière de définir l'heure de début et l'heure de fin d'enregistrement. En effet, ces heures sont fournies au moins une semaine à l'avance, et sont susceptibles de changer sans que l'utilisateur de l'appareil soit averti de ce changement. Pour réaliser un enregistrement il est donc usuel de surdimensionner la fenêtre temporelle pendant laquelle on veut réaliser cet enregistrement. Cela signifie qu'on fait commencer l'enregistrement un premier temps déterminé avant l'heure officielle de début de l'émission qu'on souhaite enregistrer, et qu'on fait terminer l'enregistrement un deuxième temps déterminé après l'heure officielle de fin de l'émission que l'on souhaite enregistrer. Ces premier et deuxième temps déterminés peuvent varier selon la confiance qu'accordent les personnes à leur mode de définition des horaires d'enregistrements. La plupart du temps ces temps varient entre ¼ d'heure et ½ heure. Cela signifie que lorsqu'on souhaite enregistrer une émission, on enregistre en plus entre ½ heure et une heure de "bruits". Ainsi pour un film qui dure quatre-vingts minutes on utilise complètement une cassette de cent vingt minutes, ou un espace sur un disque dur correspondant à cent vingt minutes.

Cela présente deux inconvénients majeurs. Un premier inconvénient est le gaspillage de place. En effet, si on considère un disque dur capable d'enregistrer dix heures de vidéo, et que l'on prend toutes les précautions nécessaires pour enregistrer correctement les émissions que l'on souhaite enregistrer, ce disque dur ne peut contenir que cinq enregistrements fait avec précaution. En théorie, le disque dur est en fait capable de contenir au moins sept enregistrements de quatre-vingts minutes correctement réalisés, c'est-à-dire sans qu'il soit besoin d'enregistrer un certain temps avant et un certain temps après pour avoir le programme complet.

Un deuxième inconvénient apparaît lors de la visualisation de l'enregistrement réalisé avec précaution. En effet, le début d'un tel enregistrement n'est pas calé avec le début du support sur lequel il est réalisé. C'est-à-dire qu'en fait les premières images de l'émission qu'on souhaitait enregistrer ne correspondent pas, soit au début de la cassette sur laquelle cette émission est enregistrée, soit ne correspondent pas au début du fichier dans lequel cette émission est enregistrée. L'utilisateur souhaitant revisualiser une émission qu'il a enregistrée doit donc commencer par parcourir la casette, ou le fichier, pour rechercher le début de l'émission. Cela constitue donc un gaspillage de temps.

L'invention résout ces problèmes en produisant, lors d'un enregistrement, autant de fichiers vidéo qu'il y a d'émissions pendant la durée d'enregistrement programmée. L'utilisateur d'un appareil, mettant en oeuvre un tel procédé, continue de programmer ses enregistrements comme auparavant, c'est-à-dire, soit en prenant des précautions, soit sans en prendre. Cependant, le résultat de l'enregistrement est différent. En effet, il obtient comme résultat plusieurs fichiers. En général, il obtient un fichier correspondant à un bout d'émission diffusé avant le programme qu'il souhaitait enregistrer, un fichier correspondant au programme qu'il souhaitait enregistrer, et un fichier correspondant à un bout d'émission diffusé après le programme qu'il souhaitait enregistrer. L'utilisateur peut alors choisir d'effacer les deux fichiers correspondants à des bouts de programmes qu'il ne souhaitait pas enregistrer, et ne conserver que le fichier correspondant à l'émission qu'il souhaitait enregistrer. Cette opération est très simple avec l'invention puis qu'il s'agit de fichiers différents.

De plus, dans l'invention lorsque l'utilisateur parcourt les fichiers qui sont enregistrés sur le disque dur de son appareil, on présente aussi une information indiquant que le fichier correspond à une émission complète ou non. Cela fournit un bon critère pour choisir les fichiers que l'utilisateur souhaite effacer ou conserver. Il n'est en effet généralement pas utile de conserver une émission incomplète.

La discrimination des émissions aux cours d'un enregistrement se fait grâce à un flux de messages d'informations qui est transmis, obligatoirement, en même temps qu'un flux vidéo dans les diffusions de programmes de télévisions numériques. Selon le standard européen DVB (Digital Video Broadcasting, soit diffusion de vidéo numérique) ce flux de messages d'informations comporte notamment des messages EIT (Event Information Table ou table d'information sur l'événement). Un message EIT comporte des informations utiles pour réaliser la discrimination des événements. Un événement est en fait un programme diffusé sur un canal ou chaîne de télévision. Dans le domaine de la télévision numérique un canal, ou chaîne, est aussi également appelé un service.

L'invention a donc pour objet un procédé numérique d'enregistrement d'une séquence vidéo dans lequel :
- on programme une date de début d'enregistrement,
- on programme une date de fin d'enregistrement,
- on programme un canal d'enregistrement,
caractérisé en ce que :
- on produit autant de fichier vidéo qu'il y a d'émissions différentes entre les dates de début et de fin d'enregistrements programmées, et sur le canal programmé.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration d'éléments utiles à la mise en oeuvre du procédé selon l'invention.
- Figure 2 : une illustration du contenu d'un disque dur d'un appareil mettant en oeuvre le procédé selon l'invention.
- Figure 3 : une illustration d'une structure d'un message EIT.
- Figure 4 : une illustration d'étapes du procédé selon l'invention.

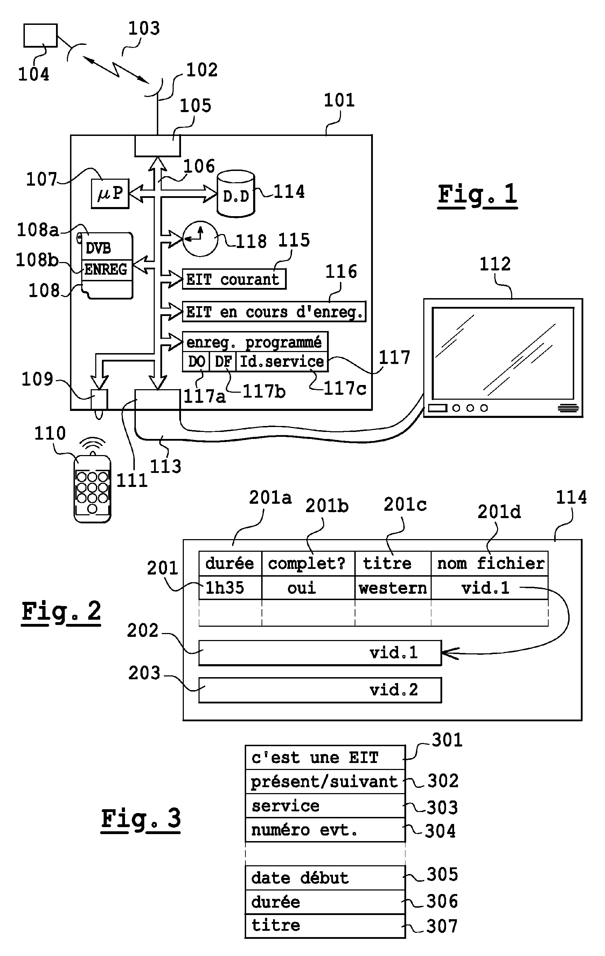

La figure 1 montre un dispositif 101 récepteur /décodeur de télévision numérique. Le dispositif 101 comporte une antenne 102 parabolique qui permet d'établir une liaison 103 hertzienne avec un satellite 104 de télédiffusion. La mise en oeuvre de l'invention est inchangée si la liaison 103 hertzienne se faisait avec un relais terrestre, ou via un réseau câblé ou tout autre médium permettant de transmettre un signal de TV (télévision) numérique, en lieu et place de l'antenne102. L'appareil 101 peut être connecté à un réseau câblé par exemple. L'antenne 102 est connectée à des circuits 105 de démultiplexage et de démodulation des signaux reçus via l'antenne 102. Les circuits 105 produisent des signaux numériques à partir des signaux analogiques qu'ils reçoivent via l'antenne 102. Ces signaux numériques sont alors placés sur un bus 106. Les circuits 105 sont paramétrables, via le bus 106, pour extraire du flux de signaux analogiques qu'ils reçoivent, via l'antenne 102, des signaux correspondant à un service donné. On rappelle ici qu'un service est synonyme d'une chaîne de télévision.

L'appareil 101 comporte aussi un microprocesseur 107 et une mémoire 108, tous deux connectés au bus 106. Le microprocesseur 107 exécute des actions, commandé par des codes instructions enregistrés dans la mémoire 108 de programme. La mémoire 108 comporte au moins deux zones. Une première zone 108a comporte des codes instructions qui commandent le microprocesseur 107 lorsque celui-ci exécute des actions en rapport avec la norme DVB, par exemple extraire d'un flux de messages d'informations, des messages EIT. On rappelle qu'un message EIT est un Event Information Table, ou table d'informations sur l'événement. Ici l'événement doit être compris comme synonyme d'un programme, ou d'une émission, qui est diffusée dans un service, c'est-à-dire sur une chaîne de télévision.

Une deuxième zone 108b comporte des codes instructions qui commandent le microprocesseur 107 lorsque celui-ci effectue des opérations en rapport avec l'enregistrement d'un événement. La mémoire 108 comporte d'autres zones qui ne sont pas représentées. Parmi ces zones on peut citer des zones de stockage de données, ainsi que des zones de travail.

Le dispositif 101 comporte aussi des circuits 109 récepteur infrarouge. Les circuits 109 permettent de recevoir des commandes émises par l'utilisateur de l'appareil 101 via une télécommande 110. Les circuits 109 sont connectés au bus 106 et produisent des signaux numériques à partir des signaux infrarouges émis par la télécommande 110. Ces signaux numériques sont alors pris en compte par microprocesseur 107 commandé par les codes instructions de la mémoire 108.

Le dispositif 101 comporte des circuits 111 connecteurs, par exemple du type connecteur péritel. Ces circuits 111 sont connectés au bus 106. Les circuits 111 permettent de connecter le dispositif 101 à un téléviseur 112 via un câble 113 péritel. L'une des fonctions du dispositif 101 est de produire des images. Ces images sont produites par le microprocesseur 107 à partir des signaux produits par les circuits 105. Une fois produites ces images sont alors fournies aux circuits 111, et ainsi transmis via le câble 113 au téléviseur 112 qui peut alors afficher ces images.

Le dispositif 101 comporte un disque dur 114 connecté au bus 106. Le disque dur 114 permet de stocker des informations qui sont reçus par l'appareil 101 via l'antenne 102, et les circuits 105 par exemple.

La figure 2 illustre une structure possible pour le contenu de données enregistrées sur le disque dur 114. Le disque dur 114 comporte une zone 201 de mémoire qui décrit un contenu du disque 114. Il s'agit en quelque sorte d'une table d'allocation des fichiers. La zone 201 est, par exemple, divisée en ligne et en colonne. Chaque ligne correspond à un fichier, chaque colonne correspond à un type de renseignement sur les fichiers. Une première colonne 201 a comporte une information sur la taille du fichier. Cela correspond, par exemple, à la durée d'un film si le fichier représente un film. Une deuxième colonne 201b comporte une information indiquant si ce fichier correspond à un événement complet, ou incomplet. Un événement complet est un événement qui est présent sur le disque dur depuis son début théorique, jusqu'à sa fin théorique. Une colonne 201c correspond au titre de l'événement. Une colonne 201d comporte un identifiant du fichier qui est décrit par la ligne. Cet identifiant permet de retrouver l'emplacement physique du fichier sur le disque dur 114. Il peut par exemple s'agir d'une adresse.

Dans une variante de l'invention, la table 201 comporte d'autres colonnes pour enregistrer, par exemple, des dates de début et de fin d'enregistrement. Dans ce cas la différence entre une date de fin et une date de début permet de calculer une durée pour l'enregistrement. On peut aussi enregistrer une date de début d'enregistrement et une durée. On obtient alors une date de fin d'enregistrement en additionnant la date de début et la durée.

Le disque dur 114 comporte aussi un premier fichier 202 correspondant à un événement 1, et un deuxièmes fichiers 203 correspondant à un événement 2. Un fichier de ce type est aussi appelé, pour l'invention, fichier vidéo. Un fichier correspondant à un événement comporte l'ensemble des informations qui compose cette événement. Il s'agit d'une ou plusieurs vidéo, d'une ou plusieurs audio, de zéro à N jeux de sous-titres, d'éventuel applications liées à l'événement. Par vidéo on entend, par exemple, un fichier, ou une partie identifiée de fichier, enregistré à un format représentant des informations vidéo. De tels formats sont, par exemple, le format MPEG (Moving Pictures Expert Group, ou groupe d'experts pour la vidéo animée), le format AVI (Audio Video Interleave, ou audio et vidéo intercalées), ou d'autres. Les format vidéo précédemment cités inclus des informations audio permettant de sonoriser la vidéo. Ces informations audio peuvent exister dans plusieurs langues, l'utilisateur sélectionnant alors la langue qu'il souhaite entendre.

La table 201 comporte donc une ligne qui décrit le fichier 202 et une ligne qui décrit le fichier 203. On a représenté sur la figure 2 la ligne décrivant le fichier 202. La première colonne de cette ligne comporte une durée, une heure trente-cinq, la deuxième colonne indique que l'événement a été enregistré complètement, la troisième colonne indique qu'il s'agit d'un "western". La quatrième colonne indique que le fichier correspondant à cette description est enregistré à l'adresse vid1.

La table 201 est utilisée lorsque l'utilisateur cherche à visualiser, et à manipuler, le contenu du disque dur 114.

La figure 1 montre aussi que le dispositif 101 comporte une mémoire 115 où est enregistré le message EIT courant. La mémoire 115 est connectée au bus 106. L'appareil 101 reçoit en permanence un flux de messages d'informations comportant des messages EIT. La figure 3 décrit la structure d'un message EIT. Un message EIT comporte un premier champ 301 qui indique sa nature. Ce premier champ 301 permet d'identifier le message EIT parmi le flux de messages d'informations qui sont reçus par le dispositif 101. Un deuxième champ 302 du message EIT indique si l'EIT donne des informations sur un événement présent ou l'événement suivant. Dans la norme DVB, seuls les messages EIT correspondant à des événements présents sont obligatoires. Un événement présent correspond à une émission qui est en cour de diffusion. On parle alors de message EIT présent pour le message EIT décrivant l'événement en cours de diffusion. Le champ 302 d'un tel message vaut, par exemple, P (présent). On parle de message EIT suivant pour le message EIT décrivant l'événement qui sera diffusé après l'événement en cours de diffusion. Le champ 302 d'un tel message vaut, par exemple, F (following, soir suivant). Lorsqu'un événement arrive au terme de sa diffusion, l'événement suivant devient l'événement présent, c'est-à-dire la valeur du champ 302 passe de F à P, et un nouveau message EIT suivant est transmis.

Un troisième champs 303 identifie le service auquel appartient l'EIT, c'est-à-dire le service que le message EIT décrit. Un quatrième champ 304 correspond à un numéro d'événement, c'est-à-dire à un identifiant de l'émission. Un cinquième champ 305 comporte une date et heure de début de l'événement. Un sixième champ 306 comporte durée de l'événement, et un champ 307 comporte le titre de l'événement. Un message EIT comporte d'autres champs volontairement non représentés car ils ne sont pas utiles pour la mise en oeuvre du procédé selon l'invention.

Le dispositif 101 reçoit en permanence un flux de messages EIT. A un instant donné le dispositif 101 est accordé, via les circuits 105, sur un service donné. Le dispositif 101 enregistre donc en permanence dans la mémoire 115 le message EIT correspondant à l'événement présent du service sur lequel est accordé le circuit 105. L'accord du circuit 105 est commandé par l'utilisateur du dispositif 101 via la télécommande 110. Cela revient en faite pour l'utilisateur du dispositif 101 à sélectionner une chaîne qu'il souhaite regarder, ou enregistrer, avec la télécommande 110.

Le microprocesseur 107, commandé par des codes instructions de la zone 108a analyse donc en permanence le flux de messages EIT qu'il reçoit via les circuits 105. Il recherche dans tous ces messages EIT ceux dont le numéro de service correspond au service qui a été sélectionné par l'utilisateur de l'appareil 101. En général, l'utilisateur du dispositif 101 sélectionne une chaîne par exemple TF1, France 2 ou canal plus. Le dispositif 101 comporte une table qui permet d'établir une relation entre la chaîne sélectionnée par l'utilisateur et un numéro de service. Parmi les messages EIT ayant le bon numéro de service, le microprocesseur sélectionne ceux correspondant à l'événement présent. Cette sélection se fait grâce au contenu du champ 302.

Le dispositif 101 comporte aussi une mémoire 116 connectée au bus 106. La mémoire 116 enregistre le message EIT de l'événement en cours d'enregistrement. L'EIT enregistré dans la mémoire 116 décrit le fichier qui est en train d'être enregistré. Dans une variante, les mémoires 115 et 116 ne comportent que les champs des messages EIT utiles pour l'invention, c'est-à-dire les champs 301 à 307.

Le dispositif 101 comporte aussi une mémoire 117 de programmation d'enregistrement. La mémoire 117 est divisée en ligne et en colonne. On peut alors aussi parler de table 117. Chaque ligne correspond à un enregistrement, ou entrée, et chaque colonne correspond à une caractéristique de cet enregistrement. La mémoire 117 comporte en particulier une colonne 117a correspondant à une date de début d'enregistrement, une colonne 117b correspondant à une date de fin d'enregistrement, et une colonne 117c correspondant à un identifiant du service à enregistrer. Les dates de début et de fin sont, par exemple, exprimées en jour, mois, année, heure et minute. Pour l'identifiant du service, l'utilisateur choisit un numéro de chaîne, ou un nom de chaîne. Dans ce cas une table interne du dispositif 101 permet d'effectuer la correspondance entre ce numéro de chaîne, ou nom de chaîne, et le numéro de service correspondant.

Dans une variante de l'invention, le champ 117b comporte une durée. La date de fin correspond alors à la date de début à laquelle on ajoute la durée de l'événement.

L'enseignement de l'invention est aussi applicable si l'utilisateur programme l'enregistrement de plusieurs services simultanément. Il suffit, dans ce cas, que les circuits 105 soient capables d'extraire simultanément des signaux qu'ils reçoivent, des signaux correspondant à plusieurs services. Dans ce cas, pour chaque service pour lequel les circuits 105 produisent des informations, l'appareil 101 comporte des mémoires du type 115 et 116. Cela permet d'avoir des informations sur les services, et de contrôler leur enregistrement.

L'appareil 101 comporte une horloge 118 connecté au bus 106. L'horloge 118 permet de mesurer la date courante. La date courante correspond à la date et à l'heure calendaire. Cette horloge permet, dans une variante, de vérifier qu'un fichier enregistré contient un événement complet ou non. Ainsi si l'heure de début d'enregistrement, mesurée grâce à l'horloge 118, est supérieure à l'heure de début d'événement, champ 305 du message EIT présent, alors il manque le début de l'événement dans le fichier correspondant à l'enregistrement de cet événement. Si l'heure de fin d'enregistrement, mesurée grâce à l'horloge 118, est inférieur à l'heur théorique de fin de l'événement, obtenue grâce aux champs 305 et 306, alors il manque al fin de l'événement dans le fichier correspondant à l'enregistrement de cet événement. Si aucune des deux conditions précédentes n'est remplie, alors l'événement est complètement enregistré.

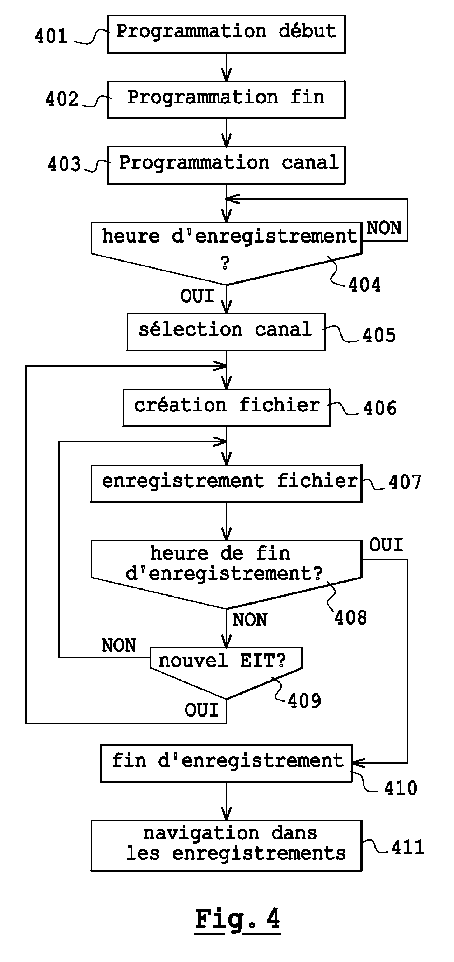

La figure 4 illustre des étapes du procédé mis en oeuvre par l'invention. Une première étape 401 est l'étape préliminaire de programmation de la date du début de l'enregistrement. Dans l'étape 401, l'utilisateur de l'appareil 101 utilise la télécommande 110 pour programmer la date de début de l'enregistrement. Cette programmation se fait via une interface graphique qui est affichée sur le téléviseur 112. Cette interface se présente, par exemple, sous la forme de champs à remplir pour paramétrer l'enregistrement. Dans l'étape 401, l'utilisateur saisit une date de début. La date se compose d'un jour, d'un mois, d'une année et d'une heure et minute de début de l'enregistrement. L'utilisateur peut paramétrer par exemple la date de début de manière à ce que l'enregistrement commence ¼ heure avant le début de l'émission qu'il souhaite enregistrer.

On passe alors à une étape 402 de programmation de la date de fin de l'enregistrement. Cette programmation ce fait via la même interface que pour la programmation de la date de début. L'utilisateur saisit alors une date de fin d'enregistrement correspondant par exemple à ¼ d'heure après la fin de l'émission qu'il souhaite enregistrer.

On passe alors à une étape 403 de programmation du service. Dans l'étape 403, l'utilisateur sélectionne le canal ou chaîne de télévision qu'il souhaite enregistrer. L'utilisateur valide alors les saisies qu'il vient d'effectuer. Cette validation se fait, par exemple, via une touche prédéfini de la télécommande 110. Lors de cette validation, le microprocesseur enregistre les informations dans une nouvelle ligne de la mémoire 117. Les étapes 401 à 403 peuvent être réalisées automatiquement par une application de type EPG (Electronic Program Guide, ou guide électronique de programmation). Une telle application est par exemple le show-view. Il s'agit de code barre présent dans les magazines de présentation de programme de télévision. Ces codes barres sont lu par une télécommande de l'appareil 101, puis transformé en une programmation d'un enregistrement, c'est-à-dire une entrée dans la table 117. On peut aussi envisager une application EPG qui présente les programmes de télévision sur un écran. L'utilisateur sélectionne alors, avec une télécommande, le programme qui l'intéresse et valide cette sélection. Cette validation provoque l'insertion dans la table 117 d'une entrée correspondant à l'enregistrement du programme sélectionné. On passe alors à une étape 404 de scrutation des heures d'enregistrements programmées.

Dans l'étape 404, le microprocesseur 107 commandé par des codes instructions de la zone 108b parcours régulièrement la mémoire 117. Il compare le contenu de la première colonne à la date délivrée par l'horloge 118.

Si au cours de l'étape 404 ce microprocesseur trouve une heure de début d'enregistrement correspondant à la date courante alors on passe à l'étape 405. Sinon le microprocesseur continue à scruter la mémoire 117.

Dans l'étape 405 le microprocesseur lit le contenu de la ligne de la mémoire 117 correspondant à la date courante délivrée par l'horloge 118. Dans la colonne 117c de cette ligne, le microprocesseur trouve un identifiant de service. Cet identifiant de service permet au microprocesseur 107 de paramétrer les circuits 105 afin que ceux-ci produisent des informations d'EIT, et des informations vidéos correspondant à cet identifiant de service. On passe alors à une étape 406 de création de fichier.

Dans l'étape 406, le microprocesseur 107, commandé par les codes instructions de la zone 108b, crée une nouvelle ligne dans la zone 201 du disque dur 114, et met à jour le contenu des mémoires 115 et 116. La mise à jour des mémoires 115 et 116 se fait par l'extraction du flux de messages EIT, du message EIT correspondant à l'événement présent. Ce message est diffusé à intervalle régulier par le satellite 104. Une fois la mémoire 115 mise à jour, le microprocesseur 107 peut alors renseigner les champs de la nouvelle ligne qui vient d'être crée dans la zone 201. En effet, le message EIT comporte une durée pour l'événement, ainsi que le titre de l'événement. Le microprocesseur 107 affecte alors un nom au fichier qu'il s'apprête à enregistrer. Ce nom correspond par exemple à une adresse sur le disque dur. On note que la mémoire 115 est mise à jour en permanence en fonction du message EIT correspondant à l'événement présent du service sur lequel sont accordés les circuits 105. La mémoire 116 n'est mise à jour que dans l'étape 406, et en fonction du contenu de la mémoire 115.

On passe alors à une étape 407 d'enregistrement du fichier. Dans l'étape 407, le microprocesseur transfert le flux d'informations vidéo produit par les circuits 105 sur le disque dur 114, et ce à partir de l'adresse qui a été allouée pour ce nouveau fichier dans l'étape 406. On note que l'ordre des étapes 406 et 407 peut être inversé, ou exécuté en même temps. Il est en effet plus important de commencer à enregistrer l'événement, pour ne pas en louper un morceau, que de décrire cette événement. On a en effet toute la durée de l'événement pour décrire celui, et renseigner les champs de la mémoire 201.

Pendant l'enregistrement, on passe à une étape 408 de scrutation de l'heure de fin d'enregistrement. Dans l'étape 408, le microprocesseur 107 compare l'heure courante à l'heure de fin d'enregistrement programmée. Si cette heure n'est pas atteinte, on passe à une étape 409 de scrutation du flux de messages EIT.

Dans l'étape 409, le microprocesseur 107 compare le contenu du champ 304 (numéro des événements de la mémoire 115) au contenu du champ 304 (numéro d'événement de la mémoire 116). S'ils sont identiques cela signifie que l'émission en cours d'enregistrement n'a pas changé depuis la dernière vérification. On repasse donc à l'étape 407 ce qui signifie que l'on poursuit l'enregistrement du fichier.

Si dans l'étape 409 la comparaison des numéros d'événement révèle qu'ils sont différents, cela signifie que depuis la dernière comparaison il y a eu un changement d'événement courant, c'est-à-dire, qu'une nouvelle émission est diffusée sur le service qui est en train d'être d'enregistré. Dans ce cas, on repasse à l'étape 406 de création d'un nouveau fichier. On crée donc une nouvelle ligne dans la zone 201 et on met à jour le champ 201b "complet" du fichier qui vient d'être enregistré. Ce champ 201b complet peut par exemple contenir la durée pendant laquelle l'émission à été enregistrée. On pourra alors comparer cette durée au contenu du champs 201a. Si l'écart entre les durées est faible, cela signifie que l'on peut considérer que l'émission a été enregistrée complètement, si l'écart est important, par exemple plus de 5% d'écart cela signifie que l'émission n'a pas été enregistrée complètement. L'étape 409 est donc assimilable à une détection de basculement de l'événement présent, c'est-à-dire on détecte, grâce au messages EIT, le moment ou l'événement suivant devient l'événement présent.

Dans une variante, on fait confiance aux informations temporelles transmises par les opérateurs via les messages EIT. On effectue alors la synchronisation des enregistrements des différents événements en se basant sur ces informations, et sur l'horloge 118. Par exemple, pour l'événement présent, on commence l'enregistrement lorsque qu'il y a coïncidence entre l'heure de début d'événement fournie par le message EIT, et l'heure courante fournie par l'horloge 118. On arrête l'enregistrement de l'événement lorsqu'il y a coïncidence entre l'heure de fin de l'événement, obtenue par la combinaison des valeurs des champs 305 et 306 du message EIT courant, et l'heure courante fournie par l'horloge 118.

Dans une variante, décrite précédemment, la détermination l'état de l'enregistrement, selon que l'événement est complètement enregistré ou non, se fait grâce aux dates de début et de fin de l'enregistrement que l'on compare aux dates de début et de fin de l'événement. Dans cette variante on obtient plus d'information, car on est en mesure de déterminer quelle partie de l'événement manque dans l'enregistrement, le début ou/et la fin. Dans ce cas on enregistre, dans la table 201, ces informations supplémentaire pour être en mesure de les présenter à l'utilisateur du dispositif 101.

On note que si l'on n'utilise pas la variante du paragraphe précédent on est aussi en mesure de déterminer quelle partie de l'événement manque dans l'enregistrement. En effet, on est capable de détecter le transitions en événements. Au moment d'une transition, si la durée enregistrée ne correspond pas à la durée de l'événement, cela signifie qu'il manque le début de l'événement. A la fin de l'enregistrement, si la durée d'enregistrement ne correspond pas à la durée de l'événement, cela signifie qu'il manque la fin de l'enregistrement.

Dans l'étape 408 si la comparaison entre l'heure courante et l'heure de fin d'enregistrement programmer révèle une concordance on passe alors à une étape 410 de fin d'enregistrement. Dans l'étape 410 on met à jour le contenu de la colonne 201 b de la table 201, cela signifie que l'on enregistre la durée pendant laquelle l'émission en cours de diffusion a été enregistrée.

L'utilisateur du dispositif 101 peut à tout moment interrompre manuellement l'enregistrement. Pour ce faire, il appuie sur une touche "stop" de la télécommande 110. Tout se passe alors comme si l'heure de fin d'enregistrement avait été atteinte.

A un moment quelconque, après la fin de l'enregistrement, on passe dans une étape 411 de navigation dans les enregistrements. C'est l'utilisateur du dispositif 101 qui provoque cette navigation par l'appui sur une touche prédéfinie de la télécommande 110, par exemple. Une fois que cette navigation est déclenchée, le microprocesseur 107 produit une image à partir du contenu de la zone 201 du disque 114. Cette image est affichée sur l'écran 112. Cette image présente à l'utilisateur, sous la forme d'une liste, l'ensemble des fichiers vidéo qui sont enregistrés sur le disque dur (114). Des renseignements extraits de la mémoire 201 sont affichés en ligne, chaque ligne correspondant à un fichier/enregistrement. Chaque ligne renseigne, par exemple, sur le titre de l'émission, sur la durée totale de l'émission, ainsi que sur la durée qui à été enregistrée. L'utilisateur est donc en mesure de déterminer quel sont les émissions qui ont été complètement enregistrées et celle qui ne l'on pas été.

Dans l'exemple qui a été choisi pour la description l'utilisateur avait programmé un enregistrement de *titre 2* sur la *chaîne 1* commençant ¼ heure avant l'émission, et se terminant ¼ heure après la fin de l'émission. Dans ce cas, la zone 201 du disque 114 comporte au moins trois lignes. Une ligne correspondant à ¼ heure de l'émission précédant l'émission que souhaitait enregistrer l'utilisateur, une ligne correspond à l'émission que souhaitait enregistrer l'utilisateur, et une ligne correspond à ¼ heure de l'émission suivant l'émission que souhaitait enregistrer l'utilisateur. La liste présentée aurait, par exemple, l'allure suivante:

| | | |
|---|---|---|
| 'chaîne 1' 'titre 1' 'date' | 20h15 à 20h30 | incomplet |
| 'chaîne 1' 'titre 2' 'date' | 20h30 à 22h12 | complet |
| 'chaîne 1' 'titre 3' 'date' | 22h12 à 22h27 | incomplet |

Les éléments entre " sont, dans la pratique, remplacé par des nom de chaîne de télévision, titres d'événement et dates réels. La liste peut être triée par chaîne, par titre, ou par date. L'utilisateur peut aussi choisir de ne pas afficher certains renseignements, par exemple les horaires de début et de fin d'enregistrement. De même l'utilisateur peut choisir d'afficher d'autres renseignements, par exemple la durée de l'événement à la place des dates de début et de fin. L'utilisateur peut encore choisir de ne pas afficher dans la liste les événements dont l'enregistrement est incomplet. Enfin l'information sur l'état de l'enregistrement, complet ou incomplet, peut préciser quelle partie de l'enregistrement est manquante, le début ou la fin. La sélection des informations à afficher s'effectue parmi les informations enregistrées dans la mémoire 201.

En voyant cela, l'utilisateur peut choisir de sélectionner, pour les effacer, les fichiers correspondant aux émissions précédant et suivant celle qu'il souhaitait enregistrer. Il peut aussi sélectionner une émission que l'utilisateur souhaitait enregistrer pour provoquer sa visualisation. Lorsque l'utilisateur efface un fichier, cela efface aussi la ligne de la table 201 correspondant à ce fichier. Cela libère l'espace qui avait été alloué pour l'enregistrement de ce fichier sur disque 114. Lorsque que l'utilisateur sélectionne un élément de la table 201 pour le visualiser, le microprocesseur 107 lit à l'adresse correspondant sur le disque dur 114 les informations vidéo pour produire des images qui sont alors visualisées sur l'écran 112.

Le procédé selon l'invention permet aussi à un utilisateur de programmer une longue plage d'enregistrement, et d'obtenir ainsi plusieurs fichiers. Dans ce cas plusieurs des fichiers obtenus peuvent correspondre à des événements complets. C'est le cas si, par exemple, l'utilisateur souhaite enregistrer deux films diffusés successivement sur le même service. L'utilisateur programme alors une plage horaire incluant les horaires de diffusion des deux films. Il obtiendra comme résultat au moins deux fichiers, un pour chacun des deux films, et pourra lancer la visualisation du second sans avoir à rechercher son début dans un enregistrement global d'une longue plage.

Une fois qu'un enregistrement est effectué, on efface la ligne correspondante dans la table 117. Cette effacement n'a pas lieu si l'enregistrement concerné est périodique, c'est-à-dire s'il doit se répéter toutes les semaines ou tous les jours par exemple.

## Revendications

1. Procédé (401 - 411) numérique d'enregistrement d'une séquence vidéo dans lequel :
- on programme (401) une date de début d'enregistrement,
- on programme (402) une date de fin d'enregistrement,
- on programme (403) un canal d'enregistrement,
- on déclenche (404) l'enregistrement à la date de début d'enregistrement,
**caractérisé en ce que** :
- on produit (406-409) autant de fichier vidéo qu'il y a d'émissions différentes entre les dates de début et de fin d'enregistrements programmées, et sur le canal programmé.

2. Procédé selon la revendication 1, **caractérisé en ce que** entre les dates de début et de fin d'enregistrement, on identifie (409) les différentes émissions en analysant un flux de messages d'information diffusé en même temps que les émissions, ce flux de messages d'information comportant notamment un identifiant de l'émission en cours sur le canal programmé, un changement de cet identifiant correspondant alors à un changement d'émission.

3. Procédé selon l'une des revendications 1 ou 2, **caractérisé en ce qu'**on extrait (409) des informations, permettant d'identifier des émissions différentes, d'un flux de messages EIT transmis selon la norme DVB.

4. Procédé selon l'une des revendications 1 à 3, **caractérisé en ce qu'**on enregistre (406) pour chaque fichier vidéo produit des informations de description du fichier.

5. Procédé selon la revendication 4, **caractérisé en ce qu'**on enregistre pour chaque fichier vidéo produit une information de titre.

6. Procédé selon l'une des revendications 4 ou 5, **caractérisé en ce qu'**on enregistre pour chaque fichier vidéo produit une information pour indiquer si le fichier correspond à une émission complète, ou à une partie d'émission.

7. Procédé selon l'une des revendications 4 à 6, **caractérisé en ce qu'**on extrait les informations de description d'un flux de messages EIT transmis selon la norme DVB.

8. Procédé selon l'une des revendications 1 à 7, **caractérisé en ce que** :
- on produit une liste des fichiers vidéo enregistrés,
- on parcourt (411) la liste des fichiers vidéo enregistrés,
- on sélectionne un fichier pour le visualiser.

9. Procédé selon l'une des revendications 1 à 7, **caractérisé en ce que** :
- on produit une liste des fichiers vidéo enregistrés,
- on parcourt (411) la liste des fichiers vidéo enregistrés,
- on sélectionne un fichier pour l'effacer.

10. Dispositif (101) récepteur/décodeur des signaux de télévision comportant au moins une mémoire de stockage et des moyens, coopérant avec cette mémoire, pour mettre en oeuvre le procédé selon l'une des revendications 1 à 9.

11. Dispositif selon la revendication 10, **caractérisé en ce que** la mémoire de stockage est un disque dur (114).
